# EUROPEAN PATENT SPECIFICATION

(11) **EP 1 537 569 B1**
(45) Date of publication and mention of the grant of the patent: **29.11.2006**
(21) Application number: 03791112.0
(22) Date of filing: 18.08.2003
(51) Int. Cl.: G11B 7/24

(54) **REWRITABLE OPTICAL DATA STORAGE MEDIUM AND USE OF SUCH A MEDIUM**
WIEDERBESCHREIBBARER TRÄGER OPTISCHER DATENSPEICHERUNG SOWIE EIN VERFAHREN ZU DESSEN EINSATZ
SUPPORT DE STOCKAGE OPTIQUE REINSCRIPTIBLE ET UTILISATION DUDIT SUPPORT

(30) Priority: 28.08.2002 EP 02078541
(43) Date of publication of application: 08.06.2005
(73) Proprietor: Koninklijke Philips Electronics N.V., 5621 BA Eindhoven (NL)
(72) Inventor: VAN PIETERSON, Liesbeth, NL-5656 AA Eindhoven (NL); LANKHORST, Martijn, H., R., NL-5656 AA Eindhoven (NL); ROOSEN, Johannes, H., J., NL-5656 AA Eindhoven (NL)
(74) Representative: van Liempd, Jan
(86) International application number: PCT/IB2003/003649
(87) International publication number: WO 2004/021341

(56) References cited:
- EP-A- 0 212 336
- WO-A-02/059890
- US-A- 4 860 274
- US-A- 4 947 372
- US-A- 5 242 784
- US-A- 5 271 978
- US-B1- 6 232 035

## Description

The invention relates to a rewritable optical data storage medium for high-speed recording by means of a focused radiation beam, said medium comprising a substrate carrying a stack of layers, which stack comprises, a first auxiliary layer, a second auxiliary layer, and a recording layer of a phase-change material mainly comprising an alloy of Sb and Ga, which recording layer is interposed between the first auxiliary layer and the second auxiliary layer.

The invention also relates to the use of such an optical data storage medium.

An embodiment of an optical data storage medium of the type mentioned in the opening paragraph is known from European patent EP 0387898 B1.

An optical data storage medium based on the phase change principle is attractive, because it combines the possibilities of direct overwrite (DOW) and high storage density with easy compatibility with read-only optical data storage systems. Phase-change optical recording involves the formation of submicrometer-sized amorphous recording marks in a crystalline recording layer using a focused relatively high power radiation beam, e.g. a laser-light beam. During recording of information, the medium is moved with respect to the focused laser-light beam that is modulated in accordance with the information to be recorded. Marks are formed when the high power laser-light beam melts the crystalline recording layer. When the laser-light beam is switched off and/or subsequently moved relatively to the recording layer, quenching of the molten marks takes place in the recording layer, leaving an amorphous information mark in the exposed areas of the recording layer that remains crystalline in the unexposed areas. Erasure of written amorphous marks is realized by recrystallization through heating with the same laser at a lower power level, without melting the recording layer. The amorphous marks represent the data bits, which can be read, e.g. via the substrate or a cover layer, by a relatively low-power focused laser-light beam. Reflection differences of the amorphous marks with respect to the crystalline recording layer bring about a modulated laser-light beam which is subsequently converted by a detector into a modulated photocurrent in accordance with the recorded information.

One of the most important demands in phase-change optical recording is a high data rate, which means that data can be written and rewritten in the medium with a user data rate of at least 30Mbits/s. Such a high data rate requires the recording layer to have a high crystallization speed, i.e. a short crystallization time, during DOW. To ensure that previously recorded amorphous marks can be recrystallized during DOW, the recording layer must have a proper crystallization speed to match the velocity of the medium relative to the laser-light beam. If the crystallization speed is not high enough the amorphous marks from the previous recording, representing old data, cannot be completely erased, meaning recrystallized, during DOW. This causes a high noise level. A high crystallization speed is particularly required in high-density recording and high data rate optical recording media, such as in disk-shaped CD-RW high speed, DVD-RW, DVD+RW, DVD-RAM, DVR-red and blue which are abbreviations of a new generation high density Digital Versatile Disk+RW, where RW refers to the rewritability of such disks, and Digital Video Recording optical storage disks, where red and blue refer to the used laser wavelength. The blue version is also called Blu-ray Disk (BD). For these disks the complete erasure time (CET) has to be lower than 30 ns. CET is defined as the minimum duration of an erasing pulse for complete crystallization of a written amorphous mark in a crystalline environment, which is measured statically. For DVD+RW, which has a 4.7 GB recording density per 120 mm disk, a user data bit rate of 26 Mbits/s is needed, and for DVR-blue said rate is 35 Mbits/s. For high speed versions of DVD+RW and DVR-blue data rates of 50 Mbits/s and higher are required. For complete erasure of an amorphous mark, two processes are known, i.e. crystallization by nucleation and crystallization by grain crystallite growth. Nucleation of crystallites is a process where nuclei of crystallites are spontaneously and randomly formed in the amorphous material. Therefore the probability of nucleation depends on the volume, e.g. thickness, of the recording material layer. Grain growth crystallization may occur when crystallites are already present, e.g. the crystalline surroundings of an amorphous mark or crystallites which have been formed by nucleation. Grain growth involves the growth of those crystallites by crystallization of amorphous material adjacent the already present crystallites. In practice both mechanisms may occur in parallel but generally one mechanism dominates over the other in terms of efficiency or speed.

Another very important demand in phase-change optical recording is a high data stability, which means that recorded data, usually in the form of amorphous marks, remain intact for a long period of time. A high data stability requires the recording layer to have a low crystallization rate, i.e. a long crystallization time, at temperatures below 100°C. Data stability or archival life may be specified e.g. at a temperature of e.g. 50°C or 30°C. During archival storage of the optical data storage medium, written amorphous marks recrystallize at a certain rate, which is determined by the properties of the recording layer. When marks are recrystallized they cannot be distinghuised anymore from the crystalline surrounding, in other words: the mark is erased. For practical purposes a recrystallization time of at least 10 years at room temperature, i.e. 30°C, is needed. The archival life is extrapolated. The extrapolation curve is based on the generally accepted assumption that the crystallization time is exponentially dependent on the inverse absolute temperature (in K). The crystallization behavior is measured on written marks. Normally the stability is based on the as deposited amorphous state, which however generally leads to a too high value of the stability. This is because the written amorphous marks contain many more nucleation sites, especially at the crystalline mark edges leading to crystallite growth, than the as deposited amorphous state layer, which increases the crystallization speed.

In European patent EP 0387898 B1 the medium of the phase-change type comprises a disc-shaped substrate of an acrylic resin having thereon a 100 nm thick first dielectric layer of SiO₂, a 100 nm-thick recording material layer of a phase-change alloy, and a 100 nm thick second dielectric layer. Such a stack of layers can be referred to as an IPI-structure, wherein I represents a dielectric layer and P represents a phase-change recording layer. Said patent discloses a recording layer of the composition (InSb)₈₀(GaSb)₂₀, which has time of crystallization of smaller than 100 ns and a crystallization temperature of larger than 120°C. Modeling by Applicants shows that this corresponds to a crystallization time, i.e. stability of the amorphous marks, of about 0.6 year at 30°C (see example Z in table 1). According to present standards such a crystallization time is by far not large enough in order to be usable as a recording layer in a stable medium.

United States Patent US 4,860,274 discloses a rewritable information storage medium including a recording layer of an alloy of In and Sb containing 50 to 80 atomic % Sb.

It is an object of the invention to provide an optical data storage medium of the kind described in the opening paragraph, having a grain growth crystallization dominated recording layer, which is suitable for high data rate optical recording using direct overwrite, at a linear velocity of more than 10 m/s and which has an archival life stability of 10⁶ years or more at a temperature of 30°C combined with a relatively low medium noise. Archival life stability means the stability of written amorphous marks. Medium noise is related to variations in reflection of the focused radiation beam when scanning crystalline portions of the recording layer.

This object is achieved in accordance with the invention by an optical data storage medium of the kind described in the opening paragraph, which is characterized in that the alloy is of a composition defined by the formula: Sb_{z}Ga_{(100-z)} and 70 ≤ z ≤ 95.

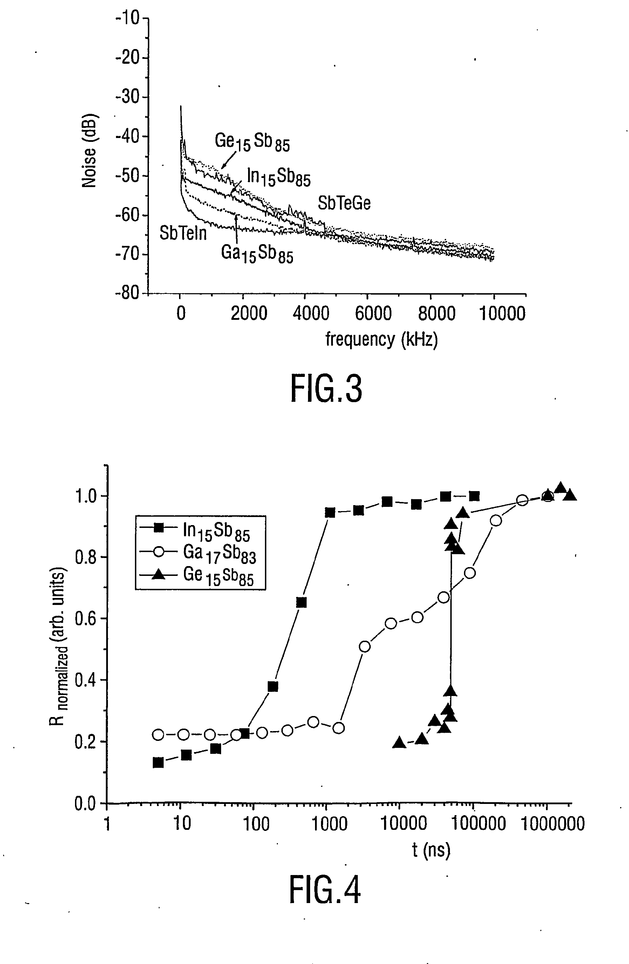

The present applicant has had the insight that this material is a promising candidate for the speed range beyond e.g. 4x DVD (4 x 3.5 m/s) velocity. The materials appear to be grain growth dominated. This is shown in table 3 where nucleation times are listed of several materials, among which the materials according to the invention. It can be seen that long nucleation times of 1 µs and more are present However all materials according to the invention show a CET of far less than 100 ns during amorphous mark erasure or recrystalization which process therefore must be grain growth dominated. The only nucleation dominated material in the list is sample Y which has a nucleation time of about 100 ns. Another indication of the growth dominated crystallization process is the spot size dependence of the CET, making the material favorable for application in high data-density applications. The materials according to the invention combine rapid crystallization (short CET) and good optical contrast with an intrinsic relatively high thermal stability and low media noise. The materials in the claimed range have a significantly higher crystallization temperature than high speed doped "eutectic" SbTe materials. "Eutectic" refers to compositions at or relatively close to eutectic composition Sb₆₉Te₃₁. The present applicant observed that for the materials according to the invention the crystallization rate can be tuned by adjusting the phase-change material composition, i.e. a high Sb/Te ratio in "eutectic" SbTe materials is beneficial for a low CET but the archival life stability decreases for high Sb/Te ratios. The applicant has also found that Ga and/or In-doped Sb compositions show relatively low disk noise when compared to high speed doped "eutectic" SbTe materials (see Fig.3). The noise originates from reflection variations in the crystalline phase, and therefore an indication of the media noise may be obtained from a noise spectrum of the read out detector during scanning of initialized, i.e. crystallized, portions of the disk at a certain velocity, e.g. 7 m/s. The noise can be quantitatively expressed as an integrated noise figure in mV. Further the melting point of the compositions according to the invention is relatively low because said compositions are relatively close to the eutectic points of the binary compositions InSb and GaSb. This has the advantage that the recording layer is relatively sensitive to the focused radiation beam.

For enhanced archival life stability, the Ga -doped Sb material preferably contains less than 91% Sb and for an even lower CET this material preferably contains more than 77% Sb. This has the advantage of an even better balance between crystallization speed and archival life stability.A higher Ga-level enhances the archival stability.

The advantage of using a binary composition is that it is easier to manufacture. The advantage of using Ga is that the extrapolated archival life stability is extremely well, i.e. far above a million years at 30°C. The advantage of using In instead of Ga is that the CET is extremely low for this composition with still acceptable archival life stability. A higher In-level enhances the crystallization speed, i.e. lower CET.

When the recording layer additionally contains up to 10 at.% of Ge the archival life stability may be enhanced. Especially when the archival life stability is in the range of < 100 years at 30°C this addition may be useful.

In a further embodiment a reflective layer is present adjacent the second auxiliary layer at a side remote from the first auxiliary layer. The first and second auxiliary layer may e.g. comprise a dielectric material. The reflective layer may serve to increase the total reflection of the stack and/or the optical contrast. Furthermore it may serve as a heat sink, especially when comprising a metal, in order to increase the cooling rate of the recording layer during the formation of amorphous marks by which re-crystallization during amorphous mark formation is counteracted. The reflective may e.g. comprise at least one of the metals selected from a group consisting of Al, Ti, Au, Ag, Cu, Pt, Pd, Ni, Cr, Mo, W and Ta, including alloys of these metals. It is preferred that an additional layer is present sandwiched between the reflective layer and the second auxiliary layer screening the reflective layer from a chemical influence of the second auxiliary layer. Especially when Ag is used in the reflective layer the possibility of e.g. S atoms of an auxiliary layer of ZnS-SiO2 reacting with the Ag should be prevented. A suitable additional layer for screening comprises e.g. Si₃N₄.

Preferably, the recording layer has a thickness smaller than 20 nm. This has the advantage that the recording layer may have a relatively high optical transmission, which is advantageous in case of multi-stack optical media. In a multi-stack optical medium several recording layers are present. The recording/reading laser beam usually is directed through a "higher level" recording layer in order to record/read into/from a "lower level" recording layer in which case the higher level recording layer must be at least partially transparent for the laser beam in order to pass to the "lower level" recording layer. Furthermore a thin recording layer of a grain growth dominated material crystallizes faster than a relatively thick recording layer. The total thickness of the layer(s) between the reflective layer and the recording layer preferably is relatively thin in order to improve the cooling effect of the reflective layer. Especially when In-doped Sb compositions are used as recording layer, which compositions show extremely fast crystallization behavior, rapid cooling of the recording layer is required during the writing of amorphous marks in the recording layer.

The cyclability of the medium may be further increased when the recording layer is in contact with at least one additional carbide layer, having a thickness between 2 and 8 nm. Cyclability is the number ofpossible DOW cycles before a certain increase in jitter level of the marks written in the medium is reached. Jitter is a measure for the positioning accuracy of the edges of the marks, e.g. in tangential direction. Higher jitter corresponds to lower positioning accuracy. The above materials are used in a stack II⁺PI⁺I or II⁺PI, where I⁺ is a carbide. Alternatively a nitride or an oxide may be used. In the II⁺PI⁺I stack the recording layer P is sandwiched between a first and a second carbide layer I⁺. The carbide of the first and the second carbide layer is preferably a member of the group SiC, ZrC, TaC, TiC, and WC, which combine an excellent cyclability with a short CET. SiC is a preferred material because of its optical, mechanical and thermal properties; moreover, its price is relatively low. The thickness of the additional carbide layer is preferably between 2 and 8 nm. The relatively high thermal conductivity of the carbide will only have a small effect on the stack when this thickness is small, thereby facilitating the thermal design of the stack. A carbide layer between the first auxiliary layer and the recording layer does not or hardly influence the optical contrast because of its relatively low thickness.

The second auxiliary layer, i.e. the layer between the reflective layer and the phase-change recording layer, protects the recording layer from the direct influence of e.g. the reflective layer and/or further layers, and optimizes optical contrast and thermal behavior. For optimal optical contrast and thermal behavior the thickness of the second auxiliary layer is preferably in the range of 10-30 nm. An extremely low CET may require a lower thickness and/or a relatively high thermal conductivity of the transparent second auxiliary layer. In view of the optical contrast, the thickness of this layer may alternatively be chosen to be λ(2n) nm thicker, wherein λ is the wavelength of the laser-light beam in nm, and n is the refractive index of the second auxiliary layer. However, choosing a higher thickness will reduce the cooling influence of the reflective or further layers on the recording layer.

An optimum thickness range for the first auxiliary layer, i.e. the layer through which the radiation beam, e.g. laser-light beam, enters first, is determined by a.o. the laser-light beam wavelength λ. When λ=670 nm an optimum is found around 90 nm.

The first and second auxiliary layers may be made of a mixture of ZnS and SiO₂, e.g. (ZnS)₈₀(SiO₂)₂₀. Alternatives are, e.g. SiO₂, TiO₂, ZnS, AlN, Si₃N₄ and Ta₂O₅. Preferably, a carbide is used, like SiC, WC, TaC, ZrC or TiC. These materials give a higher crystallization speed and better cyclability than a ZnS-SiO₂ mixture. Alternatively the second auxiliary layer may comprise a transparent material with a relatively high thermal conductivity, e.g. indium tin oxide (ITO) or hafnium nitride.

Both the reflective layer and the auxiliary layers may be provided by vapor deposition or sputtering.

The substrate of the optical data storage medium consists, for example, of polycarbonate (PC), polymethyl methacrylate (PMMA), amorphous polyolefin or glass. In a typical example, the substrate is disk-shaped and has a diameter of 120 mm and a thickness of e.g. 0.6 or 1.2 mm. When a substrate of 0.6 or 1.2 mm is used, the layers can be applied on this substrate starting with the first auxiliary layer. If the radiation beam enters the stack via the substrate, said substrate must be at least transparent to the radiation beam wavelength. The layers of the stack on the substrate may also be applied in the reversed order, i.e. starting with the second auxiliary layer or metal reflective layer, in which case the radiation beam will not enter the stack through the substrate. Optionally an outermost transparent layer may be present on the stack as a cover layer that protects the underlying layers from the environment. This layer may consist of one of the above mentioned substrate materials or of a transparent resin, for example, an UV light-cured poly(meth)acrylate with, for example, a thickness of 100 µm. Such a relatively thin cover layer allows a high numerical aperture (NA) of the focused radiation beam, e.g. NA=0.85 and must be of relatively good optical quality and homogeneous. A thin 100 µm cover layer is e.g. used for the DVR or BD disk. If the radiation beam enters the stack via the entrance face of this transparent layer, the substrate may be opaque.

The surface of the substrate of the optical data storage medium on the side of the recording layer is, preferably, provided with a servotrack that may be scanned optically with the focused radiation beam, e.g. a laser-light beam. This servotrack is often constituted by a spiral-shaped groove and is formed in the substrate by means of a mould during injection molding or pressing. This groove may alternatively be formed in a replication process in a synthetic resin layer, for example, of an UV light-cured layer of acrylate, which is separately provided on the substrate. In high-density recording such a groove has a pitch e.g. of 0.5 - 0.8 µm and a width of about half the pitch.

High-density recording and erasing can be achieved by using a short-wavelength laser, e.g. with a wavelength of 670 nm or shorter (red to blue).

The phase-change recording layer can be applied to the substrate by vapor depositing or sputtering of a suitable target. The layer thus deposited is amorphous. In order to constitute a suitable recording layer this layer must first be completely crystallized, which is commonly referred to as initialization. For this purpose, the recording layer can be heated in a furnace to a temperature above the crystallization temperature of the Ga doped Sb-Te alloy, e.g. 180°C. A synthetic resin substrate, such as polycarbonate, can alternatively be heated by a laser-light beam of sufficient power. This can be realized, e.g. in a special recorder, in which case the laser-light beam scans the moving recording layer. Such a recorder is also called initializer. The amorphous layer is then locally heated to the temperature required for crystallizing the layer; while preventing that the substrate is being subjected to a disadvantageous heat load.

The invention will be elucidated in greater detail by means of exemplary embodiments and with reference to the accompanying drawings, in which
Figure 1 shows a schematic cross-sectional view of an optical data storage medium in accordance with the invention,
Figure 2 shows a diagram of several compositions with on the vertical axis the complete erasure time (CET) and on the horizontal axis the archival life stability in years.
Figure 3 shows several noise spectra of a recording layer of different compositions.
Figure 4 shows the normalized reflection of the as-deposited amorphous state of In₁₅Ga₈₅, Ga₁₇Sb₈₃ and Ge₁₅Sb₈₅ as a function of the erasure time.

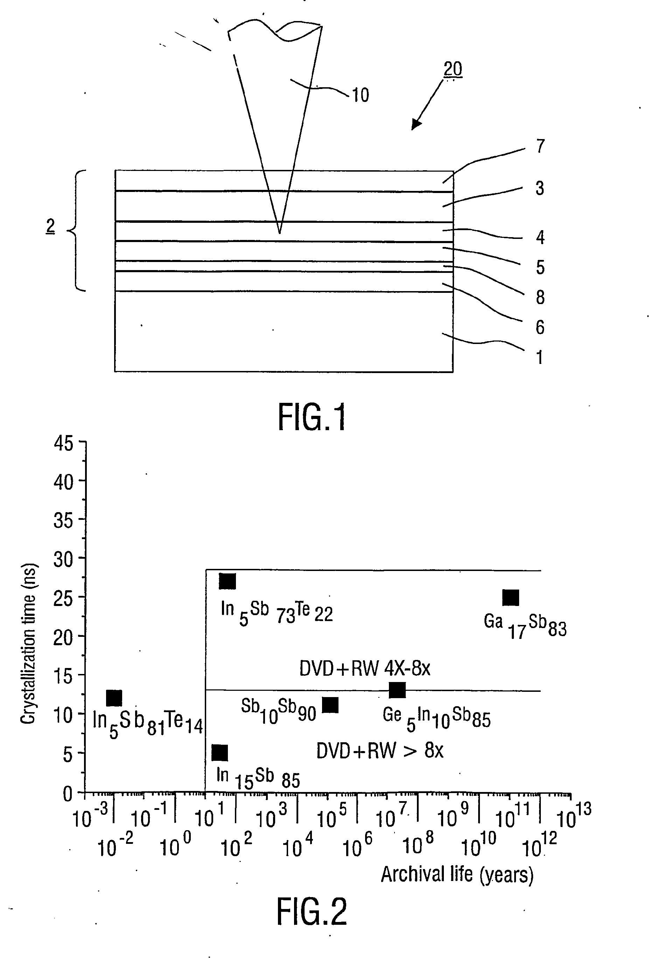

In Fig.1 the rewritable optical data storage medium 20, e.g. a DVR-red disk, for high-speed recording by means of a focused radiation beam 10, has a substrate 1 and a stack 2 of layers provided thereon. The stack 2 has a first auxiliary layer 3, made of (ZnS)₈₀(SiO₂)₂₀ having a thickness of 90 nm , a second auxiliary layer 5, made of (ZnS)₈₀(SiO₂)₂₀ having a thickness of 22 nm, and a recording layer 4 made of a phase-change material of the alloy with a composition as indicated in table 1, examples A or B according to the invention. The recording layer 4 has a thickness of 14 nm and is interposed between the first auxiliary layer 3 and the second auxiliary layer 5. A reflective layer 6, made of Ag and having a thickness of 120 nm is present adjacent the second auxiliary layer 5 at a side remote from the first auxiliary layer 3. An additional layer 8 is present sandwiched between the reflective layer 6 and the second auxiliary layer 5 screening the reflective layer 6 from a chemical influence of the second auxiliary layer. The additional layer comprises Si₃N₄ and has a thickness of 3 nm.

The amount of dopants is indicated in table 1. Further, table 1 contains the values of the measured experimental data CET, integrated noise and archival life stability at 30°C. The CET is measured by erasing a matrix of 16 x 16 amorphous marks with laser pulses, having a wavelength of 670 nm, of a varying power level and time duration. The minimal time required to erase a mark is the CET. An indication of media noise is the integrated noise obtained from a noise spectrum (see Fig.3) measured when scanning the surface of a recording layer of certain composition with a focused radiation beam, i.e. a laser-light beam, reflected upon a photo-detector. The noise spectrum was measured at a disk velocity of 7 m/s, DC-reflection was adjusted to 750 mV by varying the read-power, the resolution bandwidth was 30 kHz and the video bandwidth 10 Hz. The noise was integrated with a HP 3400RMS voltmeter. The archival life is extrapolated as explained in the introductory section of this document For the written mark crystallization behavior measurements (archival life) the following procedure was used. Stacks were sputtered on glass substrates and the flat parts of the disks were initialized with a laser. DVD density carriers were written continuously in a spiral manner in the initialized parts. Pieces cut from the disk were placed in a furnace and the amorphous marks were subsequently crystallized at a specific temperature while monitoring the reflection with a large laser spot (λ= 670 nm). From a number of isothermal crystallization time values the archival life at 30°C may be extrapolated. The amount of crystallization is defined by a certain percentage of erased, i.e. amorphatized, marks.

A protective layer 7, made e.g. of a laser-light transparent UV curable resin having a thickness of 100 µm is present adjacent the first auxiliary layer 3. Spincoating and subsequent UV curing may provide layer 7.

Sputtering provides the layers 3, 4, 5, 6 and 8. The initial crystalline state of the recording layer 4 is obtained by heating the as-deposited amorphous recording layer 4 in an initializer by means of a continuous laser-light beam to above its crystallization temperature.

Table 1 summarizes the results of examples, wherein the doping of the Sb recording layer has been varied. A is an example with the dopant Ga and example B with the dopant In, example A according to the invention. Mixing of the dopants In and Ga provides control of the CET and archival life stability. Examples T and U are doped "eutectic" SbTe compounds. Example Z is the known composition from EP 0387898 B1. Note that Z has a significantly lower archival life stability than A.

**Table 1 examples A, B, U, T and Z (B, U, T and Z not according to invention=nati).**

| | | | | | | |
|---|---|---|---|---|---|---|
| **Table 1** | Dopant 1 (at.%) | Dopant 2 (at.%) | Main component (at.%) | CET (ns) at 100 nm mark diameter | Extrapolated Archival life at 30°C | Integrated noise (mV) |
| Example | | | | | | |
| A | Ga (17) | - | Sb (83) | 25 | > 10¹⁰ years | 5.3 |
| B(nati) | - | In (15) | Sb (85) | 5 | > 30 years | 7.5 |
| Z (nati) | Ga (10) | In (40) | Sb (50) | 25 | 0.6 year | n.m. |
| U (nati) | - | In (5) | Sb(73)Te(22) (Sb/Te=3.3) | 27 | 50 | 5.3 |
| T (nati) | | In(5) | Sb(81)Te(14) (Sb/Te=5.8) | 12 | < 0.01 year | n.m. |

### Table 2.

In table 2 additional data of the examples A, B are shown. T_{cd} and T_{cw} are the crystallization temperatures of respectively the as deposited amorphous state and the written amorphous state of the recording layer. Eₐ is the activation energy in kJ/mol.

| | | | |
|---|---|---|---|
| **Table 2** | T_{cd} (°C) | T_{cw} (°C) | Ea (kJ/mol) |
| Example | | | |
| A | 233 | 210 | 325±10 |
| B | 186 | 117 | 265±10 |

### Table 3

In table 3 nucleation times of the as-deposited amorphous state of several phase change compositions are shown. The respective nucleation rates for In₁₅Ga₈₅, Ga₁₇Sb₈₃ and Ge₁₅Sb₈₅ are approximately 1, 4 and 49 µs. These rates are larger than the nucleation rates typically observed for nucleation-dominated materials such as example Y = Ge₂Sb₂Te₅ (~100 ns), but significantly lower than for the fast-growth doped SbTe compounds (see example W in table). The relatively high (compared to W) nucleation rate is beneficial for initialization of the medium and may be the reason for the observed low media noise.

| | | |
|---|---|---|
| Table 3 | | |
| Example | Phase-change composition | Nucleation time |
| B | In₁₅Ga₈₅ | 1 µs |
| A | Ga₁₇Sb₈₃ | 4 µs |
| X | Ge₁₅Sb₈₅ | 49 µs |
| Y | Ge₂Sb₂Te₅ | 100 ns |
| W | Doped SbTe | 10-400 µs |

Fig. 2 shows a diagram with CET/archival life measurements for different compositions at a mark diameter of 100 nm. The mark diameter is deduced from the experimental amorphous mark modulation value. The larger the modulation the larger the mark diameter. A modulation of 0.1 corresponds to an amorphous mark diameter of approximately 100 nm. Note that the modulation value mentioned here cannot be compared to the modulation depth during normal read out of written data. For growth dominated crystallization processes the CET is directly proportional to the mark diameter. This can be understood because the amorphous mark recrystallization starts at the edge, and therefore the smaller the mark diameter the faster it is fully recrystallized. The diagram indicates the suitable zones for DVD+RW 4x-8x recording and DVD+RW > 8x recording. It can be seen that In₁₅Sb₈₅ shows extremely fast crystallization. This extremely fast crystallization property may lead to small marks due to re-crystallization of the mark during writing. Applying a heat sink, e.g. a reflective metal layer, adjacent the recording layer can counteract this re-crystallization.

In Fig.3 read-out noise spectra are shown for different compositions. The linear velocity of the medium was 7 m/s, the resolution bandwidth of the spectrum analyzer 30 kHz, the video bandwith 10 Hz and the DC reflection level was adjusted to 750 mV. Note that the noise level for Ga and In doped Sb is significantly lower than for Ge doped Sb. Addition of a substantial amount of Ge, e.g. 15 at. %, seems to increase the noise level and for that reason it is a less suitable material to add in relatively large quantities. However, small quantities, i.e. < 10%, of Ge added to the compositions according to the invention may enhance the archival life stability. For comparison a SbTeIn composition is shown which shows excellent noise behaviour but has a relatively high CET and relatively low archival life stability. The SbTeGe composition has a noise level, i.e. 11.8 mV integrated noise, which is comparable to Ge doped Sb.

In Fig. 4 the normalized reflection **R**_{normalized} (in arbitrary units) of the as-deposited amorphous state of In₁₅Ga₈₅, Ga₁₇Sb₈₃ and Ge₁₅Sb₈₅ as a function of the erasure time t (in ns) is shown. The nucleation time is measured by monitoring the reflection level during illumination of an as deposited amorphous phase layer of phase-change material with a focused laser beam. The power level during illumination is the normal erasure level. When the reflection suddenly increases by a certain amount, e.g. a factor of two, the material is assumed to have crystallized by nucleation. The results are summarized in table 3, in which table additional results are listed for other material compositions W and Y. For further explanation see the description of this table.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

A rewritable optical data storage medium for high-speed recording by means of a focused radiation beam is described. The medium comprises a substrate carrying a stack of layers, which stack comprises, a first auxiliary layer, a second auxiliary layer, and a recording layer of a phase-change material mainly comprising an alloy of Sb and Ga. The recording layer is interposed between the first auxiliary layer and the second auxiliary layer. If the alloy is of a composition defined by the formula: Sb_{z}Ga_{(100-z)} and 70 ≤ z ≤ 95 the recording layer has a crystallization speed making it suitable for direct overwrite high speed recording at a velocity of more than 10 m/s and an archival life stability of at least 10⁶ years at 30°C. Further the recording layer has a relatively low media noise.

## Claims

1. A rewritable optical data storage medium (20) for high-speed recording by means of a focused radiation beam (10), said medium (20) comprising a substrate (1) carrying a stack (2) of layers, which stack (2) comprises, a first auxiliary layer (3), a second auxiliary layer (5), and a recording layer (4) of a phase-change material mainly comprising an alloy of Sb and Ga, which recording layer (4) is interposed between the first auxiliary layer (3) and the second auxiliary layer (5), **characterized in that** the alloy is of a composition defined by the formula: Sb_{z}Ga_{(100-z)} and 70 ≤ z ≤ 95.

2. An optical data storage medium (20) as claimed in Claim 1, wherein 77 ≤ z ≤ 91.

3. An optical data storage medium (20) as claimed in Claim 1, wherein the recording layer additionally contains up to 10 at.% of Ge.

4. An optical data storage medium (20) as claimed in Claim 1, wherein a reflective layer (6) is present adjacent the second auxiliary layer (5) at a side remote from the first auxiliary layer (3).

5. An optical data storage medium (20) as claimed in Claim 4, wherein an additional layer (8) is present sandwiched between the reflective layer (6) and the second auxiliary layer (5) screening the reflective layer (6) from a chemical influence of the second auxiliary layer (5).

6. An optical data storage medium as claimed in Claim 5, wherein the additional layer (8) comprises Si₃N₄.

7. An optical data storage medium (20) as claimed in Claim 1, wherein the recording layer (4) has a thickness smaller than 20 nm.

8. Use of an optical data storage medium (20) according to any one of the preceding Claims for high data rate recording with a recording speed of at least 10 m/s and an archival life stability of at least 10⁶ years at 30°C.

## Patentansprüche

1. Wiederbeschreibbares optisches Datenspeichermedium (20) zur Hochgeschwindigkeitsaufzeichnung mit Hilfe eines fokussierten Strahlenbündels (10), wobei dieses Medium (20) ein Substrat (1) umfasst, das einen Stapel (2) Schichten trägt, wobei dieser Stapel (2) eine erste Hilfsschicht (3), eine zweite Hilfsschicht (5) und eine Aufzeichnungsschicht (4) aus einem Phasenänderungsmaterial umfasst, das hauptsächlich aus einer Legierung aus Sb und Ga besteht, wobei diese Aufzeichnungsschicht (4) zwischen der ersten Hilfsschicht (3) und der zweiten Hilfsschicht (5) angeordnet ist, **dadurch gekennzeichnet, dass** die Legierung eine Zusammensetzung hat, die durch die folgende Formel definiert wird: Sb_{z}Ga_{(100-z)} und 70 ≤ z ≤ 95.

2. Optisches Datenspeichermedium (20) nach Anspruch 1, wobei 77 ≤ z ≤ 91.

3. Optisches Datenspeichermedium (20) nach Anspruch 1, wobei die Aufzeichnungsschicht zusätzlich bis zu 10 at.% Ge enthält.

4. Optisches Datenspeichermedium (20) nach Anspruch 1, wobei benachbart zur zweiten Hilfsschicht (5) auf einer Seite, die von der ersten Hilfsschicht (3) entfernt ist, eine Reflektionsschicht (6) vorhanden ist.

5. Optisches Datenspeichermedium (20) nach Anspruch 4, wobei zwischen der Reflektionsschicht (6) und der zweiten Hilfsschicht (5) eine Zusatzschicht (8) angeordnet ist, die die Reflektionsschicht (6) von einem chemischen Einfluss der zweiten Hilfsschicht (5) abschirmt.

6. Optisches Datenspeichermedium (20) nach Anspruch 5, wobei die Zusatzschicht (8) Si₃N₄ enthält.

7. Optisches Datenspeichermedium (20) nach Anspruch 1, wobei die Aufzeichnungsschicht (4) eine Dicke kleiner als 20 nm aufweist.

8. Verwendung eines optischen Datenspeichermediums (20) nach einem der obigen Ansprüche zur Hochgeschwindigkeitsaufzeichnung mit einer Aufzeichnungsgeschwindigkeit von mindestens 10 m/s und einer Archivstabilität von mindestens 10⁶ Jahren bei 30°C.

## Revendications

1. Support d'enregistrement optique de données réinscriptible (20) pour enregistrement à grande vitesse au moyen d'un faisceau de rayonnement focalisé (10), ledit support (20) comprenant un substrat (1) qui porte un empilement (2) de couches, lequel empilement (2) comprend une première couche auxiliaire (3), une deuxième couche auxiliaire (5) et une couche d'enregistrement (4) d'un matériau à changement de phase comprenant principalement un alliage de Sb et de Ga, laquelle couche d'enregistrement (4) est intercalée entre la première couche auxiliaire (3) et la deuxième couche auxiliaire (5), **caractérisé en ce que** l'alliage est d'une composition définie par la formule :
Sb_{z}Ga_{(100-z)} et 70 ≤ z ≤ 95.

2. Support d'enregistrement optique de données (20) selon la revendication 1, dans lequel 77 ≤ z ≤ 91.

3. Support d'enregistrement optique de données (20) selon la revendication 1, dans lequel la couche d'enregistrement contient en plus jusqu'à 10% at. de Ge.

4. Support d'enregistrement optique de données (20) selon la revendication 1, dans lequel une couche réfléchissante (6) est présente adjacente à la deuxième couche auxiliaire (5), d'un côté éloigné de la première couche auxiliaire (3).

5. Support d'enregistrement optique de données (20) selon la revendication 4, dans lequel une couche additionnelle (8) est présente prise en sandwich entre la couche réfléchissante (6) et la deuxième couche auxiliaire (5), protégeant la couche réfléchissante (6) d'une influence chimique de la deuxième couche auxiliaire (5).

6. Support d'enregistrement optique de données selon la revendication 5, dans lequel la couche additionnelle (8) est composée de Si₃N₄.

7. Support d'enregistrement optique de données (20) selon la revendication 1, dans lequel la couche d'enregistrement (4) a une épaisseur inférieure à 20 nm.

8. Utilisation d'un support d'enregistrement optique de données (20) selon une quelconque des revendications précédentes, pour enregistrement à grande débit de données avec une vitesse d'enregistrement d'au moins 10 m/s et une stabilité de durée d'archivage d'au moins 10⁶ ans à 30°C.
